(19) Europäisches Patentamt
European Patent Office
Office européen des brevets

(11) **EP 2 721 703 B1**

(12) **EUROPÄISCHE PATENTSCHRIFT**

(45) Veröffentlichungstag und Bekanntmachung des Hinweises auf die Patenterteilung:
**13.01.2021 Patentblatt 2021/02**

(21) Anmeldenummer: **12745435.3**

(22) Anmeldetag: **26.07.2012**

(51) Int Cl.:
*H02H 7/122* (2006.01)     *H02M 7/48* (2007.01)

(86) Internationale Anmeldenummer:
**PCT/EP2012/064654**

(87) Internationale Veröffentlichungsnummer:
**WO 2013/017515 (07.02.2013 Gazette 2013/06)**

(54) **VERFAHREN UND VORRICHTUNG ZUR SICHEREN ÜBERWACHUNG EINES DREHSTROMMOTORS**

METHOD AND DEVICE FOR SAFE MONITORING OF AN ALTERNATING CURRENT MOTOR

PROCÉDÉ ET DISPOSITIF DE SURVEILLANCE SÉCURISÉE D'UN MOTEUR TRIPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2011 EP 11176567**

(43) Veröffentlichungstag der Anmeldung:
**23.04.2014 Patentblatt 2014/17**

(73) Patentinhaber: **Valeo Siemens eAutomotive Germany GmbH**
**91056 Erlangen (DE)**

(72) Erfinder: **SCHWESIG, Günter**
**91054 Erlangen (DE)**

(74) Vertreter: **Dr. Gassner & Partner mbB**
**Wetterkreuz 3**
**91058 Erlangen (DE)**

(56) Entgegenhaltungen:
**DE-A1- 10 100 565     JP-A- 58 043 176**
**JP-A- 2003 189 631     US-A- 5 442 268**
**US-A- 5 534 764     US-A1- 2004 178 756**
**US-A1- 2009 056 385**

**Beschreibung**

Die Erfindung betrifft ein Verfahren und eine Vorrichtung zur sicheren Überwachung eines Drehstrommotors, insbesondere eines feldorientiert betriebenen Drehstrommotors. Der Drehstrommotor wird dabei in an sich bekannter Art und Weise von einem Wechselrichter gespeist und dieser Wechselrichter ist einem Zwischenkreis nachgeschaltet.

Verfahren und Vorrichtungen zur Überwachung von Drehstrommotoren und feldorientiert betriebenem Drehstrommotoren sind an sich bekannt. Exemplarisch wird auf die DE 10 2006 042 038 B verwiesen.

In der DE 10 2006 042 038 B wird unter anderem die Erfassung und Überwachung der Phasenströme iR, iS und iT beschrieben. Die Summe dieser Phasenströme muss sich bei ordnungsgemäßem Betrieb des Drehstrommotors aufheben, weil kein Mittelpunktanschluss vorgesehen ist und davon ausgegangen wird, dass kein Erdschluss vorliegt. Allerdings kann es nach der Ermittlung der Phasenströme bei der Aufbereitung der entsprechenden Sensorsignale in einem ASIC, Mikrocontroller oder dergleichen zu einem sogenannten Gleichzeitigkeitsnormierfehler kommen. Die DE 10 2006 042 038 B beschreibt unterschiedliche Möglichkeiten zur Erkennung und Behandlung eines solchen Fehlers.

Die JP 58-43176 A zeigt zur Erkennung einer Fehlfunktion eines Umrichters eine Ermittlung zweier Leistungswerte sowie deren Vergleich und die Generierung eines Signals bei einer Abweichung der beiden Leistungswerte. Die JP 2003-189631 A zeigt zur Erkennung einer Fehlfunktion eines Umrichters eine Ermittlung der Werte einer Eingangs- und einer Ausgangsleistung des Umrichters, wobei Fehlersignale generiert werden, wenn die Eingangsleistung verschwindet oder die Ausgangsleistung einen Schwellwert überschreitet. Die US 2009/0056385 A zeigt zur Erkennung einer Fehlfunktion eines Umrichters eine Ermittlung zweier Leistungswerte sowie deren Vergleich.

Ferner offenbart das Dokument US 2004/178756 A1 ein Verfahren zur Schätzung einer verfügbaren Drehmomentausgabe von einem batteriegespeisten Antriebsmotorsystem in einem Fahrzeug. Das System umfasst eine Hochvoltbatterie, die mittels eines Wechselrichters mit einem Antriebsmotor gekoppelt ist. Der Wechselrichter wird in Abhängigkeit eines Drehmoment/Geschwindigkeits-Kommandos innerhalb eines Wechselrichter-Controllers gesteuert. Dabei werden ein erstes geschätztes verfügbares Drehmoment in Abhängigkeit eines verfügbaren Stroms, der einem maximal verfügbaren Drehmoment in Abhängigkeit elektrische Parameter des Antriebsmotors und einer verfügbaren Batteriespannung entspricht, und ein zweites geschätztes verfügbares Drehmoment in Abhängigkeit einer verfügbaren Batterieleistung, einer Leistungsaufnahme eines Gleichspannungswandlers und einer Winkelgeschwindigkeit des Antriebsmotors ermittelt. Das geringere geschätzte verfügbare Drehmoment wird als verfügbare Drehmomentausgabe gewählt.

Das Dokument US 5 534 764 A offenbart ein Fahrzeugsteuersystem, bei dem mittels eines Fahrzeugmodells die Geschwindigkeit des Fahrzeugs basierend auf einem Drehmomentkommando simuliert und dieses basierend auf der simulierten Geschwindigkeit und einer Drehgeschwindigkeit kompensiert wird. Aus dem Dokument US 5 442 268 A ist ein Drehmomentoszillationskompensationssystem mit einem Drehmomentschätzer bekannt. Das Dokument DE 101 00 565 A1 offenbart ein Verfahren zum Bestimmen eines von einem Asynchronelektromotor aufgebrachten an einer Antriebswelle anliegenden Drehmoments, welches anhand der Drehzahl der Antriebswelle und mindestens einer elektrischen Größe des Asynchronmonotors ermittelt wird.

Eine Aufgabe der vorliegenden Erfindung besteht darin, ein weiteres Verfahren und eine nach dem Verfahren arbeitende Vorrichtung zur sicheren Überwachung eines insbesondere feldorientiert betriebenen Drehstrommotors anzugeben, insbesondere ein Verfahren bzw. eine Vorrichtung, das bzw. die die Problematik des Gleichzeitigkeitsnormierfehlers vermeidet.

Diese Aufgabe wird erfindungsgemäß mit einem Verfahren mit den Merkmalen des Anspruchs 1 gelöst. Dazu sind bei einem Verfahren zur sicheren Überwachung durch einem einem Zwischenkreis nachgeschalteten Wechselrichter gespeisten Drehstrommotors folgende Verfahrensschritte vorgesehen:

a) Es werden sämtliche Phasenströme iR, iS, iT und Phasenspannungen uR, uS, uT des Drehstrommotors ermittelt.
b) Aus den Phasenströmen und -spannungen wird eine Wechselrichterausgangsleistung Pw ermittelt.
c) Weiterhin werden ein Zwischenkreisstrom Izk und eine Zwischenkreisspannung Uzk und daraus eine Zwischenkreisleistung Pzk ermittelt.
d) Die ermittelten Leistungen, also Wechselrichterausgangsleistung Pw und Zwischenkreisleistung Pzk, werden miteinander verglichen.
e) Wenn die ermittelte Wechselrichterausgangsleistung Pw und die ermittelte Zwischenkreisleistung Pzk innerhalb vorgegebener oder vorgebbarer Grenzen nicht übereinstimmen, wird ein diesbezügliches Ausgangssignal generiert.

Die Generierung eines Ausgangssignals meint dabei jede Form von Ausgangssignal, also sowohl ein externes Ausgangssignal im Sinne einer Aktivierung eines Ausgangs wie auch ein internes Ausgangssignal im Sinne des Setzens oder Löschens einer Speicherstelle. Bei einer nicht gegebenen oder nicht ausreichenden Übereinstimmung der beiden ermittelten Leistungen kann also entweder ein Signal generiert werden im Sinne eines logischen High-Pegels oder ein Signal generiert werden, indem ein ansonsten gegebener logischer High-Pegel invertiert wird.

Die oben genannte Aufgabe wird auch mit einer Vorrichtung zur Durchführung des Verfahrens wie hier und nachfolgend beschrieben mit den Merkmalen des Anspruchs 2 gelöst. Dazu weist eine Vorrichtung zur Durchführung des Verfahrens eine Antriebsregelungseinrichtung und Mittel zur Erfassung der Phasenströme iR, iS, iT und der Phasenspannungen uR, uS, uT des Drehstrommotors sowie zur Erfassung des Zwischenkreisstroms Izk und der Zwischenkreisspannung Uzk auf. Dabei kommt in Betracht, alle drei Phasenströme iR, iS, iT zu messen. Es genügt allerdings auch, nur zwei der Phasenströme zu messen oder in sonst geeigneter Art und Weise zu erfassen, da sich der dritte Strom aus der negativen Summe der beiden anderen Phasenströme ergibt. Die Antriebsregelungseinrichtung ist so ausgeführt, dass mit dieser aus den erfassten Strömen und Spannungen eine Wechselrichterausgangsleistung Pw und eine Zwischenkreisleistung Pzk ermittelbar ist, z.B. indem die Antriebsregelungseinrichtung eine Verarbeitungseinheit in Form von oder nach Art eines Mikroprozessors und einen Speicher mit einem Computerprogramm aufweist, wobei die Verarbeitungseinheit im Betrieb der Antriebsregelungseinrichtung das Computerprogramm ausführt und das Computerprogramm Programmcodeanweisungen zur Ermittlung der Leistungswerte Pw, Pzk aus den als Messwerte zugeführten Strom- und Spannungswerten umfasst. Die Antriebsregelungseinrichtung umfasst sodann Mittel zum Vergleich der Wechselrichterausgangsleistung Pw und der Zwischenkreisleistung Pzk sowie Mittel zum Generieren eines Ausgangssignals, wenn die ermittelte Wechselrichterausgangsleistung Pw und die ermittelte Zwischenkreisleistung Pzk innerhalb vorgegebener oder vorgebbarer Grenzen nicht übereinstimmen. Bei diesen Mitteln kann es sich ebenfalls um entsprechende Programmcodeanweisungen eines Computerprogramms handeln oder auch um einen in Hardware ausgeführten Komparator, dem die beiden ermittelten Leistungswerte Pw, Pzk als Eingangssignale zugeführt werden und dessen Ausgang das jeweils generierte Ausgangssignal darstellt oder eine Grundlage dafür bildet.

Wenn die Antriebsregelungseinrichtung mehrkanalig und sicherheitsgerichtet ausgeführt ist, erfüllen die Ergebnisse der Überwachung die einschlägigen, insbesondere berufsgenossenschaftlichen Vorschriften.

Wenn die Antriebsregelungseinrichtung eine erste Funktionseinheit zur Ermittlung der Wechselrichterausgangsleistung Pw aus den erfassten Phasenströmen iR, iS, iT und Phasenspannungen uR, uS, uT und eine unabhängige zweite Funktionseinheit zur Ermittlung der Zwischenkreisleistung Pzk aus dem Zwischenkreisstrom Izk und der Zwischenkreisspannung Uzk umfasst, ergibt sich eine mehrkanalige, redundante Ermittlung der jeweiligen Leistungswerte. Selbst wenn eine der Funktionseinheiten, bei denen es sich zum Beispiel um eine Funktionseinheit mit einem eigenen Mikroprozessor, einem eigenen Speicher oder Zugriff auf einen auch durch andere Funktionseinheiten nutzbaren Speicher und einem in den Speicher geladenen Computerprogramm zur Ermittlung des jeweiligen Leistungswerts handelt, ausfällt, liefert üblicherweise noch die komplementäre Funktionseinheit einen Leistungswert, der für eine weitere, nicht mehr sicherheitsgerichtete Verarbeitung verwendet werden kann.

Dadurch, dass die Antriebsregelungseinrichtung Funktionseinheiten derart aufweist, dass durch die erste Funktionseinheit die Wechselrichterausgangsleistung Pw sowie die Zwischenkreisleistung Pzk und durch die zweite Funktionseinheit die Zwischenkreisleistung Pzk sowie die Wechselrichterausgangsleistung Pw ermittelbar ist, ergibt sich eine Möglichkeit zum Vergleich der ermittelten Leistungswerte innerhalb jeder Funktionseinheit wie auch kreuzweise. Wenn zum Beispiel bei einem kreuzweisen Vergleich zweier Leistungswerte, also jeweils Wechselrichterausgangsleistung Pw und Zwischenkreisleistung Pzk, eine Übereinstimmung oder ausreichende Übereinstimmung festgestellt wurde, ist eine mehrkanalig redundante Überprüfung der Leistungswerte erfolgt und auf Basis einer solchen Überprüfung kann das Ausgangssignal als redundantes Ausgangssignal, also z.B. in Form von jeweils einem Ausgangssignal für jeden der beiden kreuzweisen Vergleiche, generiert werden.

Der Vorteil der Erfindung besteht darin, dass der ordnungsgemäße Betrieb des Drehstrommotors durch Überwachung der beiden Leistungswerte, also Zwischenkreisleistung Pzk und Wechselrichterausgangsleistung Pw, leicht überprüfbar ist. Zudem wird bei der Betrachtung der beiden Leistungswerte die Problematik eventueller Gleichzeitigkeitsnormierfehler umgangen.

Schließlich ist die Ermittlung der beiden Leistungswerte eine Möglichkeit für eine Basis zur redundanten Ermittlung eines jeweiligen Drehmoments des Drehstrommotors. Eine Leistung P und ein Drehmoment m eines Drehstrommotors sind bekanntlich über die Beziehung $P = m \times \omega / Zp = m \times 2n \times f / Zp$, wobei $\omega$ und $f$ mittelbar bzw. unmittelbar für die Ständerfrequenz des Motors und $Zp$ für die Polpaarzahl stehen, verknüpft. Aus jedem ermittelten Leistungswert kann also bei bekannter Ständerfrequenz oder bekanntem $\omega$ das jeweilige Drehmoment ermittelt werden. Indem eine solche Berechnung nur durchgeführt wird, wenn zuvor sicher gestellt wurde, dass die ermittelte Wechselrichterausgangsleistung Pw und die ermittelte Zwischenkreisleistung Pzk innerhalb vorgegebener oder vorgebbarer Grenzen übereinstimmen, ist eine redundante Basis für die Ermittlung des Drehmoments gegeben, indem sowohl von der Wechselrichterausgangsleistung Pw wie auch von der Zwischenkreisleistung Pzk ausgegangen werden kann. Ein auf diese Weise ermitteltes Drehmoment kann für weitere Überwachungen verwendet werden, zum Beispiel solche Überwachungen, wie sie in der DE 10 2006 042 038 B bereits beschrieben sind, also zum Beispiel zur sicheren Überwachung des Drehmoments und/oder zur sicheren Begrenzung des Drehmoments.

Insoweit ist bei dem erfindungsgemäßen Verfahren vorgesehen, dass bei einer Übereinstimmung oder einer zumindest ausreichenden Übereinstimmung der ermittelten Wechselrichterausgangsleistung Pw und der ermittelten Zwischenkreisleistung Pzk die ermittelte Wechselrichterausgangsleistung Pw oder die ermittelte Zwischenkreisleistung Pzk zur Ermittlung eines momentanen Drehmoments des Drehstrommotors verwendet wird.

Soweit einzelne Aspekte des Verfahrens in Software ausgeführt sind, etwa die Ermittlung der beiden Leistungswerte und/oder deren Vergleich und/oder die Erzeugung des Ausgangssignals in Abhängigkeit vom Ergebnis des Vergleichs ist die Erfindung auch ein Computerprogramm mit durch einen Computer ausführbaren Programmcodeanweisungen und andererseits ein Speichermedium mit einem derartigen Computerprogramm sowie schließlich auch eine Antriebsregelungseinrichtung für einen Drehzahlmotor mit einer Verarbeitungseinheit und einem Speicher, in deren Speicher als Mittel zur Durchführung des Verfahrens und seiner Ausgestaltungen ein solches Computerprogramm geladen oder ladbar ist.

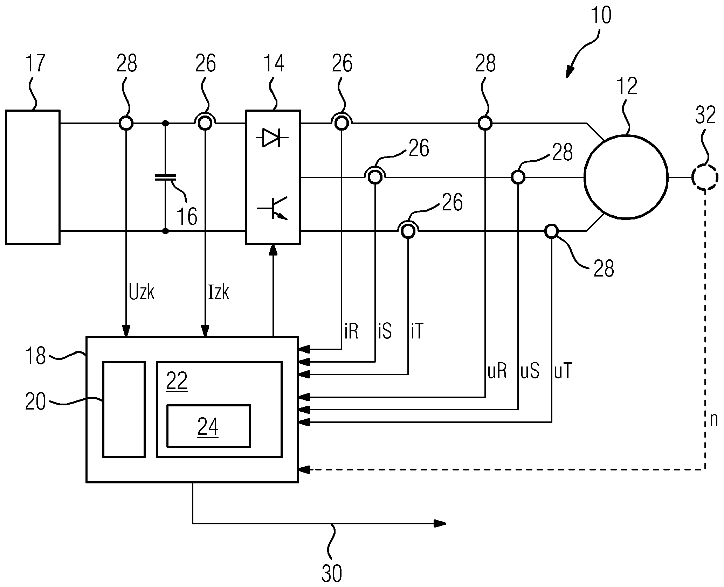

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Die einzige FIG zeigt einen Antrieb mit einem Drehstrommotor.

Die FIG zeigt einen insgesamt mit 10 bezeichneten Antrieb mit einem im Folgenden mitunter auch nur kurz als Motor bezeichneten Drehstrommotor 12. Der Drehstrommotor 12 wird durch einen Wechselrichter 14 gespeist, der seinerseits einem Zwischenkreis mit einem Zwischenkreiskondensator 16 nachgeschaltet ist. Der Antrieb wird aus einer Spannungsquelle 17 gespeist, z.B. einer Batterie oder dergleichen oder einem Versorgungsnetz. Zur Steuerung und Antriebsregelung ist eine Antriebsregelungseinrichtung 18 vorgesehen, die insbesondere den Wechselrichter 14 ansteuert, um eine gewünschte Drehzahl des Motors 12 zu erreichen. Dafür umfasst die Antriebsregelungseinrichtung 18 in an sich bekannter Art und Weise eine Verarbeitungseinheit 20 in Form von oder nach Art eines Mikroprozessors und einen Speicher 22, in den mindestens ein Computerprogramm 24 geladen ist.

Eine Überwachung des Motors 12 erfolgt auf Basis einer Ermittlung der Phasenströme iR, iS, iT und Phasenspannungen uR, uS, uT sowie des Zwischenkreisstroms Izk und der Zwischenkreisspannung Uzk. Dafür sind entsprechende Sensoren 26, 28 vorgesehen. Jeder Sensor 26, 28 liefert einen Messwert für zum Beispiel einen Phasenstrom oder eine Phasenspannung an die Antriebsregelungseinrichtung 18. Die Antriebsregelungseinrichtung 18 ermittelt aus den jeweiligen Messwerten eine Wechselrichterausgangsleistung Pw und eine Zwischenkreisleistung Pzk auf Basis der nachfolgenden Beziehungen:

$$Pw = iR \times uR + iS \times uS + iT \times uT$$

$$Pzk = Izk \times Uzk.$$

Dafür ist in den Speicher 22 entweder ein entsprechendes Computerprogramm 24 geladen oder ein bereits vorhandenes Computerprogramm 24 ist um Computerprogrammanweisungen zur Ermittlung der beiden oben genannten Leistungswerte, nämlich der Wechselrichterausgangsleistung Pw und der Zwischenkreisleistung Pzk, ergänzt. Alternativ kann die Antriebsregelungseinrichtung 18 zur Ermittlung der beiden Leistungswerte auch in Hardware ausgeführte Multiplikatoren und Addierer umfassen.

Die beiden Leistungswerte werden durch die Antriebsregelungseinrichtung 18 verglichen. Dafür umfasst das oder ein Computerprogramm 24 entsprechende Programmcodeanweisungen oder die Antriebsregelungseinrichtung 18 einen Komparator.

Bei einem normalen und fehlerfreien Betrieb des Motors 12 besteht die Erwartung, dass die beiden Leistungswerte identisch sind. Wenn also zu irgendeinem Zeitpunkt eine Abweichung der beiden Leistungswerte erkannt wird, liegt eine Ausnahmesituation vor.

Zur Behandlung einer solchen Ausnahmesituation ist vorgesehen, dass die Antriebssteuerungseinrichtung 18 ein Ausgangssignal 30 erzeugt, wenn die ermittelte Wechselrichterausgangsleistung Pw und die ermittelte Zwischenkreisleistung Pzk innerhalb vorgegebener oder vorgebbarer Grenzen nicht übereinstimmen. Die Berücksichtigung einer Übereinstimmung oder einer nicht gegebenen Übereinstimmung innerhalb vorgegebener oder vorgebbarer Grenzen trägt der Tatsache Rechnung, dass zum Beispiel bei einer Verarbeitung der jeweiligen Messwerte durch ein Computerprogramm 24 und eine vorangehende Analog/Digital-Wandlung Rundungsfehler oder dergleichen auftreten können.

Das Ausgangssignal kann implementationsabhängig entweder eine gegebene ausreichende Übereinstimmung der beiden Leistungswerte oder eine nicht gegebene Übereinstimmung der beiden Leistungswerte anzeigen.

Bei einer Übereinstimmung der ermittelten Wechselrichterausgangsleistung Pw und der ermittelten Zwischenkreisleistung Pzk innerhalb der vorgegebenen oder vorgebbaren Grenzen kann die ermittelte Wechselrichterausgangsleistung Pw oder die ermittelte Zwischenkreisleistung Pzk zur Ermittlung eines momentanen Drehmoments des Motors 12 verwendet werden. Dazu wird mit einem Encoder 32 ein Maß für eine Drehzahl n des Motors 12 aufgenommen. Diese Drehzahl n entspricht bei Vernachlässigung von Effekten wie Schlupf und dergleichen im Wesentlichen der Ständerfrequenz.

Auf dieser Basis kann anhand der bekannten Beziehung

$$P = m \times \omega/Zp = m \times 2\pi \times f/Zp \approx m \times 2\pi \times n$$

mit einem der ermittelten Leistungswerte Pw, Pzk und der ermittelten Drehzahl n das Drehmoment m ermittelt werden. Der Wert des so ermittelten Drehmoments m kann im Weiteren bestimmungsgemäß überwacht werden, zum Beispiel auf das Einhalten von vorgegebenen oder vorgebbaren Grenzwerten.

Einzelne zentrale Aspekte der hier vorgelegten Beschreibung lassen sich damit kurz wie folgt zusammenfassen: Es wird ein Verfahren zur sicheren Überwachung eines durch einen einem Zwischenkreis nachgeschalteten Wechselrichter 14 gespeisten Drehstrommotors 12 und eine nach dem Verfahren arbeitende Vorrichtung angegeben, bei dem bzw. der aus allen Phasenströmen und Phasenspannungen eine Wechselrichterausgangsleistung Pw und aus einem Zwischenkreisstrom und einer Zwischenkreisspannung eine Zwischenkreisleistung Pzk ermittelt wird, wobei die beiden ermittelten Leistungen verglichen werden und in Abhängigkeit vom Ergebnis des Vergleichs ein Ausgangssignal 30 generiert wird. Wenn bei einem Vergleich der beiden Leistungswerte eine Abweichung festgestellt wird, ist eine Ausnahmesituation erkannt, die durch das Ausgangssignal 30 angezeigt wird. Solange die beiden ermittelten Leistungswerte innerhalb der vorgegebenen oder vorgebbaren Grenzen übereinstimmen, handelt es sich um eine redundante Ermittlung zumindest eines Leistungswertes mit dem in einer nachfolgenden Operation zum Beispiel ein Drehmoment des Motors 12 ermittelt werden kann. Indem die beiden Leistungswerte fortwährend oder zyklisch verglichen werden, handelt es sich bei dem zum Beispiel für die Ermittlung des jeweiligen Drehmoments verwendeten Leistungswert auch um einen fehlersicher ermittelten Leistungswert, denn bei einer Übereinstimmung der beiden Leistungswerte kann von einer korrekten Ermittlung jedes Leistungswerts ausgegangen werden. Insgesamt eignet sich der hier vorgeschlagene Ansatz damit auch als Basis für eine fehlersichere Drehmomentüberwachung.

**Patentansprüche**

1.  Verfahren zur sicheren Überwachung eines durch einen einem Zwischenkreis nachgeschalteten Wechselrichter (14) gespeisten Drehstrommotors (12) mit folgenden Verfahrensschritten:

    a) Ermitteln eines jeden Phasenstroms (iR,iS,iT) des Drehstrommotors (12),
    b) Ermitteln einer jeden Phasenspannung (uR,uS,uT) des Drehstrommotors (12),
    c) Ermitteln einer Wechselrichterausgangsleistung (Pw) aus den Phasenströmen (iR,iS,iT) und den Phasenspannungen (uR, uS, uT),
    d) Ermitteln eines Zwischenkreisstroms (Izk),
    e) Ermitteln einer Zwischenkreisspannung (Uzk),
    f) Ermitteln einer Zwischenkreisleistung (Pzk) aus dem Zwischenkreisstrom (Izk) und der Zwischenkreisspannung (Uzk) unabhängig von der Ermittlung der Wechselrichterausgangsleistung (Pw),
    g) Vergleichen der ermittelten Wechselrichterausgangsleistung (Pw) und der ermittelten Zwischenkreisleistung (Pzk),
    h) Generieren eines Ausgangssignals (30), wenn die ermittelte Wechselrichterausgangsleistung (Pw) und die ermittelte Zwischenkreisleistung (Pzk) innerhalb vorgegebener oder vorgebbarer Grenzen nicht übereinstimmen,

    wobei das Ausgangssignal (30) eine Ausnahmesituation anzeigt,
    **dadurch gekennzeichnet,**
    **dass** bei einer Übereinstimmung der ermittelten Wechselrichterausgangsleistung (Pw) und der ermittelten Zwischenkreisleistung (Pzk) innerhalb der vorgegebenen oder vorgebbaren Grenzen die ermittelte Wechselrichterausgangsleistung (Pw) oder die ermittelte Zwischenkreisleistung (Pzk) zur redundanten Ermittlung eines momentanen Drehmoments des Drehstrommotors (12) verwendet wird,
    wobei die Wechselrichterausgangsleistung (Pw) ausgegeben wird, wenn eine Ermittlung der Zwischenkreisleistung (Pzk) nicht möglich sein sollte oder die Zwischenkreisleistung (Pzk) ausgegeben wird, wenn eine Ermittlung der Wechselrichterausgangsleistung (Pw) nicht möglich sein sollte und wobei die Wechselrichterausgangsleistung (Pw) oder die Zwischenkreisleistung (Pzk) zur Ermittlung eines momentanen Drehmoments des Drehstrommotors (12) verwendet wird,

wobei durch eine erste Funktionseinheit die Wechselrichterausgangsleistung (Pw) und die Zwischenkreisleistung (Pzk) ermittelt werden und durch eine zweite Funktionseinheit die Wechselrichterausgangsleistung (Pw) und die Zwischenkreisleistung (Pzk) ermittelt werden und das Vergleichen innerhalb jeder Funktionseinheit wie auch kreuzweise durchgeführt wird.

2. Vorrichtung zur Durchführung des Verfahrens nach Anspruch 1, mit einer Antriebsregelungseinrichtung (18) und Mitteln zur Erfassung mindestens zweier der drei Phasenströme (iR,iS,iT) und Mitteln zur Erfassung der drei Phasenspannungen (uR,uS,uT) des Drehstrommotors (12) sowie zur Erfassung des Zwischenkreisstroms (Izk) und der Zwischenkreisspannung (Uzk),

wobei mittels der Antriebsregelungseinrichtung (18) und einer davon umfassten ersten Funktionseinheit aus den erfassten Strömen und Spannungen die Wechselrichterausgangsleistung (Pw) und die Zwischenkreisleistung (Pzk) und einer von der Antriebsregelungseinrichtung (18) umfassten, von der ersten Funktionseinheit unabhängigen zweiten Funktionseinheit die Zwischenkreisleistung (Pzk) und die Wechselrichterausgangsleistung (Pw) ermittelbar sind,

wobei die Antriebsregelungseinrichtung (18) Mittel zum Vergleichen der Wechselrichterausgangsleistung (Pw) und der Zwischenkreisleistung (Pzk) innerhalb jeder Funktionseinheit wie auch kreuzweise, sowie Mittel zum Generieren eines Ausgangssignals (30), wenn die ermittelte Wechselrichterausgangsleistung (Pw) und die ermittelte Zwischenkreisleistung (Pzk) innerhalb vorgegebener oder vorgebbarer Grenzen nicht übereinstimmen, umfasst, wobei das Ausgangssignal (30) dazu ausgebildet ist, eine Ausnahmesituation anzuzeigen, und

wobei die Antriebsregelungseinrichtung (18) dazu ausgestaltet ist, mittels der ersten und zweiten Funktionseinheit einen Leistungswert für die ermittelte Wechselrichterausgangsleistung (Pw) bzw. Zwischenkreisleistung (Pzk) auszugeben und bei einem Ausfall der ersten oder der zweiten Funktionseinheit mittels der nicht ausgefallenen komplementären Funktionseinheit einen Leistungswert in Form entweder der Wechselrichterausgangsleistung (Pw) oder der Zwischenkreisleistung (Pzk) auszugeben.

3. Vorrichtung nach Anspruch 2, wobei die Antriebsregelungseinrichtung (18) mehrkanalig und sicherheitsgerichtet ausgeführt ist.

4. Vorrichtung nach Anspruch 2 oder 3, wobei das Ausgangssignal (30) als redundantes Ausgangssignal generierbar ist.

**Claims**

1. Method for the safe monitoring of a three-phase motor (12) fed by an inverter (14) connected downstream of an intermediate circuit, with the following method steps:

   a) Determine each phase current (iR,iS,iT) of the three-phase motor (12),
   b) Determine each phase voltage (uR,uS,uT) of the three-phase motor (12),
   c) Determining an inverter output power (Pw) from the phase currents (iR,iS,iT) and the phase voltages (uR, uS,uT),
   d) Determining a DC link current (Izk),
   e) Determining a DC link voltage (Uzk),
   f) Determining an intermediate circuit power (Pzk) from the intermediate circuit current (Izk) and the intermediate circuit voltage (Uzk) independently of the determination of the inverter output power (Pw),
   g) Comparing the determined inverter output power (Pw) and the determined intermediate circuit power (Pzk),
   h) Generating an output signal (30) if the determined inverter output power (Pw) and the determined intermediate circuit power (Pzk) do not match within predetermined or pre-defined limits,

   wherein the output signal (30) indicates an exceptional situation,
   **characterized in that**,
   if the determined inverter output power (Pw) and the determined intermediate circuit power (Pzk) match within the predetermined or predeterminable limits, the determined inverter output power (Pw) or the determined intermediate circuit power (Pzk) is used for redundantly determining an instantaneous torque of the three-phase motor (12),

wherein the inverter output power (Pw) is output if the intermediate circuit power (Pzk) cannot be determined or the intermediate circuit power (Pzk) is output if the inverter output power (Pw) cannot be determined and

wherein the inverter output power (Pw) or the intermediate circuit power (Pzk) is used to determine a momentary torque of the three-phase motor (12),

wherein the inverter output power (Pw) and the intermediate circuit power (Pzk) are determined by a first functional unit and the inverter output power (Pw) and the intermediate circuit power (Pzk) are determined by a second functional unit and the comparison is performed within each functional unit as well as crosswise.

2.  Device for carrying out the method according to claim 1, having a drive control device (18) and means for detecting at least two of the three phase currents (iR,iS,iT) and means for detecting the three phase voltages (uR,uS,uT) of the three-phase motor (12) and for detecting the intermediate circuit current (Izk) and the intermediate circuit voltage (Uzk),

wherein the inverter output power (Pw) and the intermediate circuit power (Pzk) can be determined from the sensed currents and voltages by means of the drive control device (18) and a first functional unit comprising the same, and the intermediate circuit power (Pzk) and the inverter output power (Pw) can be determined from the sensed currents and voltages by means of a second functional unit comprising the drive control device (18) and independent of the first functional unit,

wherein the drive control device (18) comprises means for comparing of the inverter output power (Pw) and the intermediate circuit power (Pzk) and means for generating an output signal (30), if the determined inverter output power (Pw) and the determined intermediate circuit power (Pzk) do not coincide within predetermined or predeterminable limits, wherein the output signal is adapted to indicate an exceptional situation, and wherein the drive control device (18) is designed to output a power value for the determined inverter output power (Pw) or intermediate circuit power (Pzk) by means of the first and second functional unit and

in the event of failure of the first or the second functional unit, to output a power value by means of the non-failed complementary functional unit in the form of either the inverter output power (Pw) or the intermediate circuit power (Pzk).

3.  Device according to claim 2, wherein the drive control device (18) is designed to be multi-channel and safety-oriented.

4.  The device according to claim 2 or 3, wherein the output signal (30) can be generated as a redundant output signal.

**Revendications**

1.  Procédé de surveillance sécurisée d'un moteur à courant triphasé (12) alimenté par un onduleur (14) connecté en aval d'un circuit intermédiaire comprenant les étapes de procédé suivantes consistant à :

    a) déterminer chaque courant de phase (iR, iS, iT) du moteur à courant triphasé (12),
    b) déterminer chaque tension de phase (uR, uS, uT) du moteur à courant triphasé (12),
    c) déterminer une puissance de sortie d'onduleur (Pw) à partir des courants de phase (iR, iS, iT) et des tensions de phase (uR, uS, uT),
    d) déterminer un courant de circuit intermédiaire (Izk),
    e) déterminer une tension de circuit intermédiaire (Uzk),
    f) déterminer une puissance de circuit intermédiaire (Pzk) à partir du courant de circuit intermédiaire (Izk) et de la tension de circuit intermédiaire (Uzk) indépendamment du calcul de la puissance de sortie d'onduleur (Pw),
    g) comparer la puissance de sortie d'onduleur (Pw) déterminée et la puissance de circuit intermédiaire (Pzk) déterminée,
    h) générer un signal de sortie (30) lorsque la puissance de sortie d'onduleur (Pw) déterminée et la puissance de circuit intermédiaire (Pzk) déterminée ne concordent pas dans les limites prédéfinies ou pouvant être prédéfinies,

    en ce que le signal de sortie (30) indique une situation d'exception,
    **caractérisé en ce qu'**
    en cas d'une concordance de la puissance de sortie d'onduleur (Pw) déterminée et de la puissance de circuit intermédiaire (Pzk) déterminée dans les limites prédéfinies ou pouvant être prédéfinies, la puissance de sortie d'onduleur (Pw) déterminée ou la puissance de circuit intermédiaire (Pzk) déterminée est utilisée pour la détermination redondante d'un couple momentané du moteur à courant triphasé (12),
    **en ce que** la puissance de sortie d'onduleur (Pw) est sortie si une détermination de la puissance de circuit intermédiaire (Pzk) n'est pas possible ou la puissance de circuit intermédiaire (Pzk) est sortie si une détermination de la puissance de sortie d'onduleur (Pw) n'est pas possible et **en ce que** la puissance de sortie d'onduleur (Pw) ou la puissance de circuit intermédiaire (Pzk) est utilisée pour la détermination d'un couple momentané du moteur à courant triphasé (12), **en ce que** la puissance de sortie d'onduleur (Pw) et la puissance de circuit intermédiaire (Pzk) sont déterminées par une première unité fonctionnelle et la puissance de sortie d'onduleur (Pw) et la puissance de circuit intermédiaire (Pzk) sont déterminées par une seconde unité fonctionnelle et la comparaison dans chaque unité fonctionnelle ainsi que de manière croisée est effectuée.

2. Dispositif de mise en œuvre du procédé selon la revendication 1, comportant un dispositif de réglage d'entraînement (18) et des moyens de détection d'au moins deux des trois courants de phase (iR, iS, iT) et des moyens de détection des trois tensions de phase (uR, uS, uT) du moteur à courant triphasé (12) ainsi que de détection du courant de circuit intermédiaire (Izk) et de la tension de circuit intermédiaire (Uzk), en ce qu'au moyen du dispositif de réglage d'entraînement (18) et d'une première unité fonctionnelle comprenant celui-ci à partir des courants et tensions détectés, la puissance de sortie d'onduleur (Pw) et la puissance de circuit intermédiaire (Pzk) peuvent être déterminées et la puissance de circuit intermédiaire (Pzk) et la puissance de sortie d'onduleur (Pw) peuvent être déterminées au moyen d'une deuxième unité fonctionnelle indépendante de la première unité fonctionnelle comprenant le dispositif de réglage d'entraînement (18), en ce que le dispositif de réglage d'entraînement (18) comprend un moyen de comparaison de la puissance de sortie d'onduleur (Pw) et de la puissance de circuit intermédiaire (Pzk) dans chaque unité fonctionnelle ainsi que de manière croisée, ainsi qu'un moyen de génération d'un signal de sortie (30) lorsque la puissance de sortie d'onduleur (Pw) déterminée et la puissance de circuit intermédiaire (Pzk) déterminée ne concordent pas dans des limites prédéfinies ou pouvant être prédéfinies, en ce que le signal de sortie (30) est conçu de façon à indiquer une situation d'exception et en ce que le dispositif de réglage d'entraînement (18) est réalisé de façon à sortir une valeur de puissance pour la puissance de sortie d'onduleur (Pw) déterminée et/ou de la puissance de circuit intermédiaire (Pzk) au moyen de la première et de la deuxième unité fonctionnelle et, en cas de défaillance de la première ou de la deuxième unité fonctionnelle, de sortir une valeur de puissance soit sous forme de puissance de sortie d'onduleur (Pw) ou de puissance de circuit intermédiaire (Pzk) au moyen de l'unité fonctionnelle complémentaire non défaillante.

3. Dispositif selon la revendication 2, en ce que le dispositif de réglage d'entraînement (18) est réalisé de manière multivoie et sécurisée.

4. Dispositif selon la revendication 2 ou 3, en ce que le signal de sortie (30) peut être généré en tant que signal de sortie redondant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006042038 B
- JP 58043176 A
- JP 2003189631 A
- US 20090056385 A
- US 2004178756 A1
- US 5534764 A
- US 5442268 A
- DE 10100565 A1